# EUROPÄISCHE PATENTSCHRIFT

(11) **EP 1 842 895 B1**
(45) Veröffentlichungstag und Bekanntmachung des Hinweises auf die Patenterteilung: **04.12.2013**
(21) Anmeldenummer: 07006935.6
(22) Anmeldetag: 03.04.2007
(51) Int. Cl.: C10G 1/08, C10G 3/00

(54) **Verfahren zur Verflüssigung von Biomasse**
Method for liquidising biomass
Procédé destiné à la liquéfaction de biomasse

(30) Priorität: 08.04.2006 DE 102006016684
(43) Veröffentlichungstag der Anmeldung: 10.10.2007
(73) Patentinhaber: Karlsruher Institut für Technologie, 76131 Karlsruhe (DE)
(72) Erfinder: Kruse, Andrea, Dr., 76646 Bruchsal (DE); Dinjus, Eckhard, Dr., 76774 Leimersheim (DE); Watanabe, Massaru, Sendai, 982-0803 (JP); Baier, Florian, 68163 Mannheim (DE)
(74) Vertreter: Gärtner, Stephan

(56) Entgegenhaltungen:
- EP-A- 0 147 234
- EP-A- 0 157 339
- EP-A1- 0 182 309
- WO-A-81/00855
- WO-A-89/08138
- WO-A-2006/117002
- US-A- 1 931 549
- US-A- 2 177 557
- US-A- 4 396 786
- US-A- 4 536 584
- US-A- 4 935 567
- US-A- 5 871 638

## Beschreibung

Die Erfindung betrifft ein Verfahren zur Umsetzung von Biomasse in flüssige, d.h. ölartige Reaktionsprodukte.

Das Fischer-Tropsch-Verfahren ist ein seit ca. 80 Jahren bekanntes Verfahren, das dazu eingesetzt wird, um Öl aus Synthesegas herzustellen. In Ullmann's Encyclopedia of Industrial Chemistry, Release 2006, 7th Edition, Wiley VCH Verlag, Weinheim, CD-Ausgabe, Kap. 2, Indirect Coal Gasification*,* wird das Fischer-Tropsch-Verfahren beschrieben. Als Katalysatoren werden Zeolithe und dotierte Katalysatoren auf Eisenbasis eingesetzt. Der dort in Absatz 2.1. vorgestellte Mechanismus geht von CO und H₂, den beiden Hauptkomponenten von Synthesegas, aus.

Weiterhin beschreibt M. Dry in High quality diesel via the Fischer-Tropsch process - a review, J. Chem. Tech. and Biotech. 77, S. 43-50, 2002, in Absatz 6.2 Fe-, Co-, Ni- und Ru-basierte Katalysatoren als Fischer-Tropsch-Katalysatoren, wobei Fe- und Co-basierte Katalysatoren bevorzugt werden.

Ebenso befasst sich E. Iglesia in Design, synthesis, and use of cobalt-based Fischer-Tropsch synthesis catalysts, Applied Catalysis A 161, S. 59-78, 1997, mit Fischer-Tropsch-Katalysatoren auf Kobaltbasis.

Die für das Fischer-Tropsch-Verfahren benötigten Temperaturen liegen je nach eingesetztem Verfahren im Bereich von ca. 170°C bis 340°C. Das Synthesegas selbst wird aus Erdgas, Kohle oder Biomasse bei Temperaturen von ca. 1000 °C hergestellt. Diese hohe Temperatur verursacht hohe Betriebs- und Investitionskosten, so dass das Fischer-Tropsch-Verfahren nur in großem Maßstab wirtschaftlich ist.

Das sog. *Hydrothermal Upgrading* (HTU-Verfahren) ist ein Verfahren, bei dem in heißem Hochdruckwasser aus Biomasse (in der Regel Holz) Öl erzeugt wird. Ein Problem dieses Verfahrens besteht in der geringen Ölausbeute bei hohem Gehalt an gelösten Kohlenwasserstoffen, was z.B. den Aufwand zur Abwasserbehandlung erhöht. Außerdem wird abhängig von den jeweiligen Versuchsbedingungen unerwünschter Koks gebildet.

Normalerweise werden beim HTU-Verfahren keine Katalysatoren eingesetzt; allerdings erhöhen geeignete Katalysatoren die Ölausbeute.

S. Karagöz, T. Bhaskar, A. Muto, Y. Sakata, T. Oshiki und T. Kishimoto beschreiben in Low-temperature catalytic hydrothermal treatment of wood biomass: analysis of liquid products, Chem. Eng. J. 108, S. 127-137, 2005, den Einfluss von Katalysatoren wie K₂CO₃, KOH, Na₂CO₃ und NaOH auf die hydrothermale Verflüssigung von Biomasse. Rb- und Cs-Carbonate als Katalysatoren verändern das Produktspektrum, vermindern dabei die Feststoffausbeute und erhöhen die Ölausbeute.

Die EP 0 204 354 A1 offenbart ein Verfahren zur Herstellung von kohlenwasserstoffhaltigen Flüssigkeiten aus Biomasse. Hierbei wird der Zusatz von Na₂CO₃ und Ni/Mo als Hydrierungskatalysatoren erwähnt.

Die US 4,113,446 offenbart ein Verfahren zur Vergasung von festen oder flüssigen organischen Materialien. Hierzu wird z.B. ein Fischer-Tropsch-Katalysator eingesetzt, der CoO und MoO₃ enthält. Dieser Katalysator vermindert jedoch wie die anderen getesteten Katalysatoren die Ölausbeute unter den beschriebenen Versuchsbedingungen. Der Grund für diese Beobachtung ist offensichtlich die offensichtlich zu hoch gewählte Temperatur.

Die WO 81/00855 offenbart ein Verfahren zur Verflüssigung von Biomasse. Hierbei wird die wäßrige Biomasse in Kontakt gebracht mit Co₂O₃ als Katalysator.

Ausgehend hiervon ist es die Aufgabe der vorliegenden Erfindung, ein Verfahren vorzuschlagen, das die genannten Nachteile und Einschränkungen nicht aufweist. Insbesondere besteht die Aufgabe der vorliegenden Erfindung darin, ein Verfahren zur Verflüssigung von Biomasse so auszugestalten, dass das Öl direkt aus der Biomasse hergestellt wird, so dass der in hohem Maße unwirtschaftliche Schritt, zunächst bei ca. 1000 °C Synthesegas aus der Biomasse herzustellen, entfällt.

Diese Aufgabe wird durch die Verfahrensschritte des Anspruchs 1 gelöst. Die Unteransprüche beschreiben vorteilhafte Ausgestaltungen der Erfindung.

Für das erfindungsgemäße Verfahren zur Umsetzung von Biomasse in Öl wird gemäß Verfahrenschritt a) zunächst nasse Biomasse, d.h. Biomasse mit einem Wassergehalt von mindestens 50 Gew.%, insbesondere von mindestens 60 Gew.%, in einem Reaktionsgefäß bereitgestellt. Enthält die Biomasse einen geringen Wassergehalt als 50 Gew.% bzw. 60 Gew.%, wird sie zunächst mit Wasser versetzt. Das erfindungsgemäße Verfahren kann kontinuierlich oder diskontinuierlich (Batch-Betrieb) ablaufen.

Die nasse Biomasse wird anschließend gemäß Verfahrensschritt b) bei einem Druck von mindestens 5 MPa, bevorzugt von mindestens 10 MPa aufgeheizt, bis sie sich nahe beim oder im überkritischen Zustand des Wassers befindet, d.h. bei einer Temperatur von mindestens 250°C, bevorzugt von mindestens 300°C.

Wesentlich an der vorliegenden Erfindung ist der gemäß Verfahrensschritt c) erfolgende Kontakt der wässrigen Biomasse mit Co₂O₃ als Katalysator. Dieser Katalysator kann direkt zur wässrigen Biomasse zugegeben werden. Alternativ wird die wässrige Biomasse über ein Festbett geleitet, das einen derartigen Katalysator umfasst.

Dieser Katalysator ist bereits aus dem Fischer-Tropsch-Verfahren bekannt. In der vorliegenden Erfindung wird dieser Katalysator jedoch in einem hiervon verschiedenen Verfahren eingesetzt, um in heißem Hochdruckwasser direkt aus Biomasse Öle herzustellen. Hierdurch entfällt die gemäß dem Stand der Technik erforderliche vorgeschaltete Vergasung der Biomasse bei hohen Temperaturen.

Während beim Fischer-Tropsch-Verfahren die Reaktion von CO und H₂, den beiden Hauptkomponenten von Synthesegas, ausgeht, tritt hier ein bislang nicht beschriebener Mechanismus auf, der offensichtlich auf Zwischenprodukten basiert, die bei der hydrothermalen Zersetzung von Biomasse entstehen.

Schließlich werden gemäß Verfahrensschritt d) die flüssigen Reaktionsprodukte, d.h. Öle, aus dem Reaktionsgefäß entnommen.

In einer besonderen Ausgestaltung wird während des Verfahrens weiterhin ein Hydrierungsmittel zugegeben, das im Sinne der DE 10 2004 038 491 A1 aktiven Wasserstoff bereitstellt.

Erfindungsgemäß wird als Hydrierungsmittel KHCO₃ eingesetzt. Ein derartiges Alkalisalz kann bereits in der Biomasse vorhanden sein, so dass es in diesem Fall nicht zusätzlich zugegeben werden muss.

Der prinzipielle Unterschied zwischen den Hydrierungsmitteln und den Fischer-Tropsch-Katalysatoren besteht darin, dass die Hydrierungsmittel nur die Bildung von C-H-Bindungen fördern, während die Fischer-Tropsch-Katalysatoren vor allem die Bildung von C-C-Bindungen begünstigen.

Die vorliegende Erfindung, die in der direkten Umwandlung von Biomasse in Öl unter Verwendung von heißem Hochdruckwasser besteht, weist als wesentlichen Vorteil eine höhere Ausbeute am gewünschten Produkt Öl auf, ohne dass als Zwischenprodukt zunächst Synthesegas bei ca. 1000 °C hergestellt werden muss. Offenbar katalysieren die Fischer-Tropsch-Katalysatoren die C-C-Verknüpfung von Biomasse-Abbauprodukten und fördern damit die Ölbildung.

Die Erfindung wird im Folgenden anhand von Ausführungsbeispielen und der Figuren näher erläutert. Es zeigen:
- **Fig. 1**: Ölausbeute ohne bzw. mit Zusätzen von KHCO₃ bzw. Co₂O₃ bei 300 °C, 60 min, 10 % (g/g) Glucose ohne Zugabe von HCOOH.
- **Fig. 2**: Ölausbeute ohne bzw. mit Zusätzen von KHCO₃ bzw. Co₂O₃ bei 300 °C, 60 min, 10 % (g/g) Glucose mit Zugabe von HCOOH.

Für die nachfolgenden Versuche wurde ein Taumelautoklav (Innenvolumen 1000 ml) eingesetzt, der für eine Temperatur von 500 °C und einen Druck von 50 MPa ausgelegt und der aus säurebeständigem, austenitischem CrNiMo-Stahl (Werkstoffe Nr. 1.4571 bzw. 1.4980) gefertigt ist.

Das Reaktionsgefäß war geschmiedet und an der Innenseite auf Grund der höheren Anforderungen an die Temperatur- und Korrosionsbeständigkeit mit Inconel 625 (Werkst.-Nr: 2.4856) ausgekleidet. Auf das Gefäß war mittels acht Dehnschrauben (SW36) der Deckel aufgesetzt. Der Deckel war ebenfalls aus Inconel 625 gearbeitet und wurde mit einer Konusdichtung (Metall auf Metall) gedichtet. Außerdem waren im Deckel zwei Abdrückschrauben, ein Rohr (DN4) zur Aufnahme von 2 Thermoelementen, je ein Gasein- und -auslassventil (DN3), ein Manometeranschluss, eine Berstscheibe und ein Blindstopfen angeordnet. Um das Reaktionsgefäß war eine 200 mm starke Isolierung angebracht, in der die Heizstäbe fest installiert waren. Bei den Heizstäben handelte es sich um Widerstandsheizstäbe mit einer Leitung von insgesamt 4 kW.

Der Autoklav wurde locker in den Heiz-/Isoliermantel eingesetzt, der horizontal pendelnd in eine Gabel eingehängt war, die vertikal in ein Axiallager eingesteckt war. Am hinteren Ende des Heizmantels war ein Kugelgelenk angebracht, das über einen Exzenter mit der Antriebswelle des Getriebemotors (0,18 kW, 45 U/min) verbunden war. Durch diesen Exzenter kam es zu einer zweiaxialen Taumelbewegung, die eine gute Durchmischung des Autoklaveninhalts gewährleistete.

Bei den hier beschriebenen Experimenten wurde eine Glucose-Lösung als Modellsubstanz für wässrige Biomasse zusammen mit Zusätzen und Katalysatoren in den Autoklaven gegeben und bei einer Heizrate von 3 K/min. aufgeheizt. Als Zusätze bzw. Katalysatoren dienten KHCO₃, Ameisensäure HCOOH, Co₃O₄, ZrO₂ bzw. Ru/TiO₂. Nach einer Reaktionszeit von 30 bzw. 60 min wurde der Reaktor abgekühlt. Nach Erreichen der Raumtemperatur wurde zunächst das gebildete Gas entnommen und deren Volumen und die Zusammensetzung bestimmt. Danach wurden die im Reaktor befindlichen Flüssigkeiten aus dem Reaktor entfernt und mit ca. 20 1 Wasser nachgespült. Der Reaktor wurde anschließend mit Aceton gespült, um an der Reaktorwand anhaftendes Öl zu entfernen. Das Aceton wurde anschließend abdestilliert und die verbleibende Ölmenge gewogen. Aus mehreren Wiederholungen ergab sich der relative Fehler dieser Bestimmung zu etwa 5%. Die wässrige Fraktion wurde bezüglich des gelösten Kohlenstoffanteils und einiger typischer wasserlöslicher Reaktionsprodukte wie z. B. Essigsäure, Glykolsäure, Phenol analysiert.

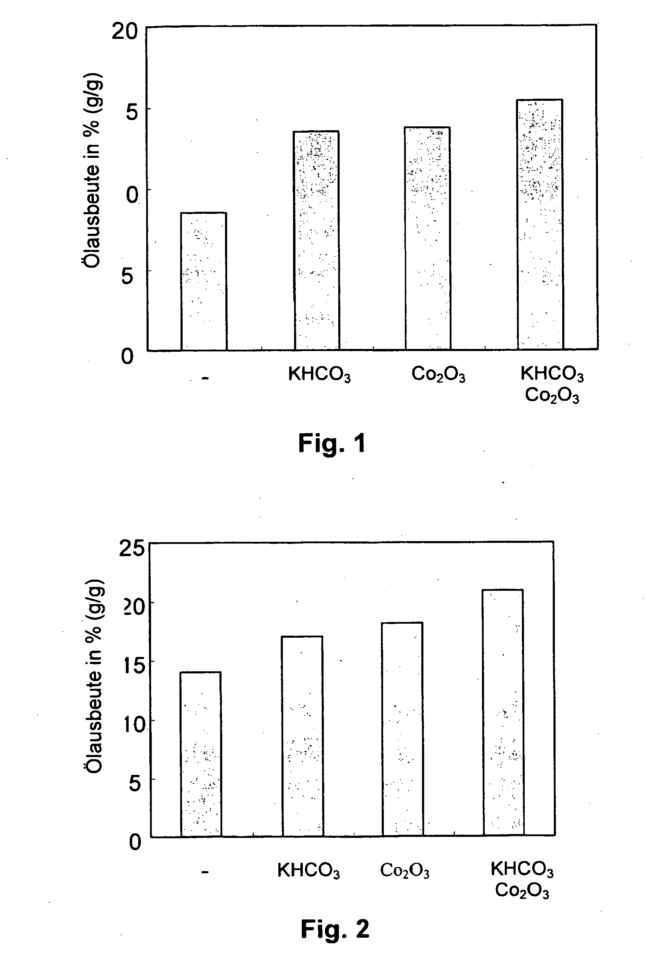

**Fig. 1** zeigt, dass bei der Umsetzung einer Lösung von 10 % (g/g) Glucose in Wasser bei 300 °C und einer Reaktionszeit von 60 min der Zusatz von KHCO₃ die Ölausbeute erhöht. Eine ähnliche Erhöhung wird durch Zusatz von Co₂O₃ erreicht. Die Kombination von KHCO₃ und Co₂O₃ führte zu einer weiteren Erhöhung der Ölausbeute.

**Fig. 2** zeigt Ergebnisse von Versuchen, bei denen zusätzlich zu den Versuchen gemäß **Fig. 1** Ameisensäure HCOOH zugesetzt wurde. Hierbei diente die Ameisensäure als Quelle für aktiven Wasserstoff. Ingesamt zeigt sich hierbei derselbe Effekt der Katalysatoren, wobei die Ölausbeute insgesamt höher ist.

Sowohl mit als auch ohne Zusatz von Ameisensäure geht die Erhöhung der Ölausbeute mit einer Erhöhung der Essigsäurekonzentration zu Ungunsten anderer gelöster Nebenprodukte in der wässrigen Phase einher.

Der Zusatz von Ru/TiO₂ bzw. von ZrO₂ führte nicht zu der erwünschten Erhöhung der Ölausbeute. In beiden Fällen veränderte sich allerdings das Produktspektrum: Ru/TiO₂ führte zu einem erhöhten Anteil von hydrierten Produkten, während ZrO₂ die Bildung höherer, stark sauerstoffhaltiger Substanzen wie z.B. Estern oder Ethern förderte.

Die vorliegenden Versuche zeigen, dass eine Zugabe von Co₂O₃ die Ölausbeute erhöht. Die höchste Ölausbeute wird erzielt, wenn gleichzeitig KHCO₃ und Co₂O₃ zugesetzt werden. Die relative Erhöhung der Essigsäurekonzentration im Wasser vermindert zudem den Aufwand zur Behandlung des Abwassers, da Essigsäure eine vergleichsweise unbedenkliche Chemikalie ist.

## Patentansprüche

1. Verfahren zur Verflüssigung von Biomasse mit den Verfahrensschritten
a) Bereitstellen von Biomasse, die einen Wassergehalt von mindestens 50 Gew.% aufweist, in einem Reaktionsgefäß, wobei der wässrigen Biomasse KHCO₃ zugesetzt wird,
b) Aufheizen der wässrigen Biomasse bei einem Druck von mindestens 5 MPa auf eine Temperatur von mindestens 250 °C und
c) Inkontaktbringen der wässrigen Biomasse mit Co₂O₃ als Katalysator,
d) Entnehmen der flüssigen Reaktionsprodukte aus dem Reaktionsgefäß.

2. Verfahren nach Anspruch 1, bei dem die bereitgestellte Biomasse einen Wassergehalt von mindestens 60 Gew.% aufweist.

3. Verfahren nach Anspruch 1 oder 2, bei dem die Biomasse auf eine Temperatur von mindestens 300 °C bei einem Druck von mindestens 10 MPa aufgeheizt wird.

4. Verfahren nach einem der Ansprüche 1 bis 3, bei dem der wässrigen Biomasse ferner HCOOH zugesetzt wird.

## Claims

1. Method for liquidising biomass with the process steps of
a) providing a biomass with a water content of 50% by weight, into a reaction container, wherein KHCO₃ is added to the aqueous biomass,
b) heating the aqueous biomass at a pressure of at least 5 MPa to a temperature of at least 250°C and
c) bringing the aqueous biomass into contact with CO₂O₃ as catalyst,
d) removing the liquid reaction products from the reaction container.

2. Method according to claim 1, in which the biomass provided has a water content of at least 60% by weight.

3. Method according to claim 1 or 2, in which the biomass is heated to a temperature of at least 300°C at a pressure of at least 10 MPa.

4. Method according to one of the claims 1 to 3, in which HCOOH is further added to the aqueous biomass.

## Revendications

1. Procédé de fluidification de biomasse comprenant les étapes consistant à :
a) préparer dans un réacteur, une biomasse ayant une teneur en eau d'au moins 50 % en poids du KHCO₃ étant ajouté à cette biomasse aqueuse,
b) chauffer la biomasse aqueuse sous une pression d'au moins 5 MPa à une température d'au moins 250°C, et
c) mettre en contact la biomasse aqueuse avec du Co₂CO₃ faisant office de catalyseur,
d) prélever le produit réactionnel fluide du réacteur.

2. Procédé conforme à la revendication 1, selon lequel la biomasse préparée a une teneur en eau d'au moins 60 % en poids.

3. Procédé conforme à la revendication 1 ou 2, selon lequel la biomasse est chauffée à une température d'au moins 300°C sous une pression d'au moins 10 MPa.

4. Procédé conforme à l'une des revendications 1 à 3, selon lequel on ajoute en outre du HCOOH à la biomasse aqueuse.
